# EUROPEAN PATENT APPLICATION

(11) **EP 4 765 426 A1**
(43) Date of publication of application: **24.06.2026**
(21) Application number: 25782803.8
(22) Date of filing: 11.03.2025
(51) Int. Cl.: H01M 50/383, H01M 10/658, H01M 50/207, H01M 50/342, H01M 50/249

(54) **BATTERY MODULE, AND BATTERY PACK AND VEHICLE INCLUDING SAME**

(30) Priority: 05.04.2024 KR 20240046874
(71) Applicant: LG Energy Solution, Ltd., Seoul 07335 (KR)
(72) Inventor: CHANG, Hyuk-Kyun, Daejeon 34122 (KR); PARK, Ju-Hun, Daejeon 34122 (KR)
(74) Representative: Plasseraud IP
(86) International application number: PCT/KR2025/003206
(87) International publication number: WO 2025/211600

(57) **Abstract**

The present disclosure relates to a battery module including: a module case having an inner space formed therein; a plurality of battery cells configured to be stored in the inner space of the module case; and a barrier including a first blocking member provided between the plurality of battery cells and a second blocking member provided on at least one side of the first blocking member and configured such that its end is bent.

## Description

### TECHNICAL FIELD

The present disclosure relates to a battery module, and a battery pack and vehicle including the same. Specifically, the present disclosure relates to a battery module capable of suppressing thermal propagation inside the battery module, and a battery pack and vehicle including the same.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

Meanwhile, since a battery cell involves a chemical reaction during charging and discharging, its performance may deteriorate when used in environments exceeding the appropriate temperature. Moreover, if thermal control is not properly maintained at the appropriate temperature, there remains a potential risk of unexpected ignition or explosion. In addition, a battery module is configured in a structure in which such battery cells are densely stored inside a module housing. Therefore, if a thermal event occurs in any one of the battery cells, the high-temperature gas and flame discharged therefrom may propagate to adjacent battery cells, potentially causing a chain reaction of battery cell explosions, which poses a significant safety risk.

Therefore, conventional battery modules have thermal barriers, such as aerogel or silicone, interposed between battery cells to partition or separate the battery cells. However, these thermal barriers are vulnerable to flames and have low rigidity, so there is a high risk of damage if any battery cell explodes. Furthermore, the shape of the thermal barrier is deformed by high pressure due to swelling of the battery cell, venting gas, or flames, making it difficult to prevent physical damage to the battery cell.

Therefore, there is a need to develop a structure capable of suppressing and delaying thermal propagation by more reliably partitioning battery cells so that, even if a thermal event occurs in some battery cells inside a battery module, gas or flames are prevented from spreading to other battery cells inside the battery module and causing thermal runaway.

### DISCLOSURE

### Technical Problem

The present disclosure is designed to solve the problems of the related art, and therefore the present disclosure is directed to providing a battery module capable of effectively preventing or delaying thermal runaway propagation between battery cells by clearly partitioning the battery cells.

The present disclosure is also to provide a battery pack and vehicle including such a battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a module case having an inner space formed therein; a plurality of battery cells configured to be stored in the inner space of the module case; and a barrier comprising a first blocking member provided between the plurality of battery cells and a second blocking member provided on at least one side of the first blocking member and configured such that its end is bent.

The bent portion of the second blocking member may be configured such that its end is in contact with an inner surface of the module case.

The bent portion of the second blocking member may be configured to be bent in a direction away from the first blocking member.

The second blocking member may be configured such that a surface thereof faces a surface of the battery cell.

The second blocking member may be provided on both sides of the first blocking member, and its end may be configured to be bent in a direction away from the first blocking member.

The module case may include a case body having an upper opening to allow the battery cell to be seated therein, and a top plate coupled to cover the upper opening of the case body, and the bent portion of the second blocking member may be configured to be compressible by the top plate.

The module case may have a venting hole formed on an upper side to discharge venting gas generated in the battery cell to the outside, and the bent portion of the second blocking member may be configured to be bent toward the venting hole.

The bent portion of the second blocking member may be configured such that its end is in contact with the venting hole.

The bent portion of the second blocking member may include a support configured such that its end is bent toward an inner circumferential surface of the venting hole.

The bent portion of the second blocking member may have one or more unevenness portions configured such that at least a portion thereof protrudes inward.

The bent portion of the second blocking member may have an inner bent portion configured such that its end is bent toward the battery cell.

In another aspect of the present disclosure, there is provided a battery pack including a battery module according to the present disclosure.

In another aspect of the present disclosure, there is provided a vehicle including a battery module according to the present disclosure.

### Advantageous Effects

According to one aspect of the present disclosure, it is possible to suppress, by reliably partitioning the battery cells inside the battery module, high-temperature gas or flame from moving along a stacking direction of the battery cells in the space between the battery cells and the module case by the second blocking member.

Therefore, according to the above aspect of the present disclosure, even if a thermal event occurs in some battery cells inside the battery module, the gas or flame can be effectively prevented or delayed from spreading to other battery cells inside the battery module and causing thermal runaway. As a result, the safety and reliability of the battery module can be ensured.

In addition, according to another aspect of the present disclosure, the high-temperature gas or flame generated in the battery cells inside the battery module can be smoothly discharged to the outside of the battery module.

In addition, according to another aspect of the present disclosure, the high-temperature gas or flame discharged to the outside of the battery module can be suppressed from flowing back into the battery module.

In addition, according to another aspect of the present disclosure, events resulting from thermal runaway of a battery pack including multiple battery modules or a device equipped with them, such as a fire or explosion, can be prevented or delayed.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure, which may be, for example, a cross-sectional view taken along line I - I' in FIG. 1.
FIG. 4 is an enlarged view of part A in FIG. 3, which illustrates a direction in which gas or the like is discharged during thermal runaway of a battery module according to an embodiment of the present disclosure.
FIG. 5 is a drawing illustrating a second blocking member included in a battery module according to another embodiment of the present disclosure.
FIG. 6 is an exploded perspective view of a barrier included in a battery module according to an embodiment of the present disclosure.
FIG. 7 is a drawing illustrating a state in which a top plate included in a battery module is separated according to an embodiment of the present disclosure.
FIG. 8 is a drawing illustrating a second blocking member included in a battery module according to another embodiment of the present disclosure.
FIG. 9 is a drawing illustrating a second blocking member included in a battery module according to another embodiment of the present disclosure.
FIG. 10 is a drawing illustrating a top plate included in a battery module according to another embodiment of the present disclosure.
FIG. 11 is a drawing illustrating a second blocking member included in a battery module according to another embodiment of the present disclosure.
FIG. 12 is a drawing illustrating a second blocking member included in a battery module according to another embodiment of the present disclosure.
FIG. 13 is a drawing illustrating a second blocking member included in a battery module according to another embodiment of the present disclosure.
FIG. 14 is a schematic perspective view of a battery pack including a battery module according to an embodiment of the present disclosure.
FIG. 15 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction, i.e., a longitudinal direction of the battery cell, perpendicular to the X-axis direction on the horizontal plane (X-Y plane), and the Z-axis direction may indicate an up-down direction (vertical direction), i.e., a height direction of the battery cell, perpendicular to both the X-axis direction and the Y-axis direction.

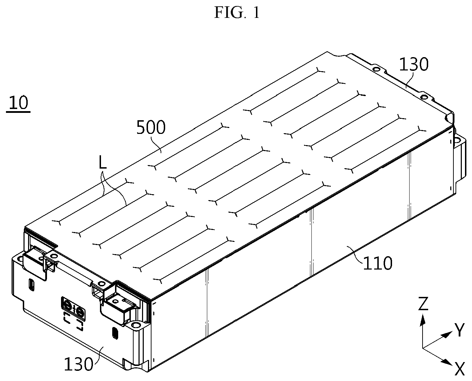

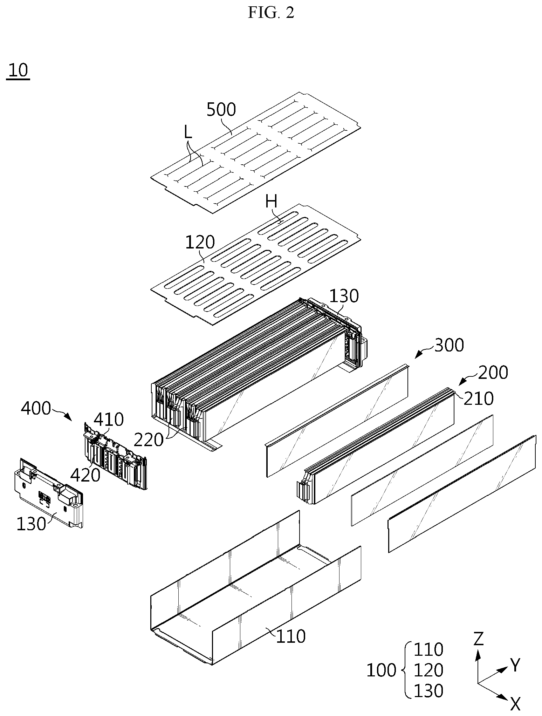

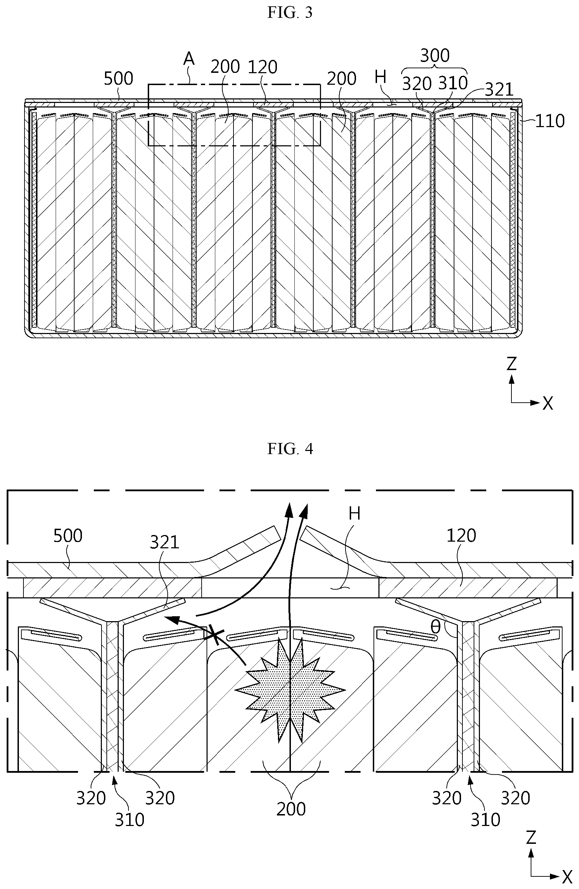

FIG. 1 is an overall perspective view of a battery module according to an embodiment of the present disclosure, and FIG. 2 is an exploded perspective view of a battery module according to an embodiment of the present disclosure. FIG. 3 is a cross-sectional view of a battery module according to an embodiment of the present disclosure, which may be, for example, a cross-sectional view taken along line I - I' in FIG. 1. In addition, FIG. 4 is an enlarged view of part A in FIG. 3, which illustrates a direction in which gas or the like is discharged during thermal runaway of a battery module according to an embodiment of the present disclosure.

Referring to FIGS. 1 to 4, a battery module 10 according to an embodiment of the present disclosure may include a module case 100, a battery cell 200, and a barrier 300.

First, the module case 100 may be configured to store a plurality of battery cells 200 and a barrier 300. Specifically, an inner space may be formed in the module case 100, and a plurality of battery cells 200 and a barrier 300 may be stored in the inner space.

A plurality of battery cells 200 may be provided. The plurality of battery cells 200 may be provided to be stacked in one direction. For example, as shown in FIG. 2, the plurality of battery cells 200 may be stacked along the left-right direction (X-axis direction).

The battery cell 200 may be a pouch-type secondary battery. The battery cell 200 may include an electrode assembly and a cell case 210 that stores the electrode assembly. The cell case 210 may store the electrode assembly in a receiving portion, and the edges of the receiving portion may be heat-fused to form sealing portions. The sealing portion may be provided on three of the four edges of the battery cell 200.

In addition, each of the plurality of battery cells 200 may have an electrode lead 220. The electrode lead 220 may be connected to the electrode assembly, and may extend to the outside of the cell case 210, functioning as an electrode terminal.

A pair of electrode leads 220 may be provided, and the pair of electrode leads 220 may extend outward from both ends of the battery cell 200, for example, in the longitudinal direction (±Y-axis directions). In this case, the pair of electrode leads 220 may be a positive electrode lead and a negative electrode lead. The battery cell 200 may be configured such that two electrode leads 220 are located only at one end in the Y-axis direction, for example, at the end in the +Y-axis direction, as necessary.

The battery cell 200 may be provided to stand with the edge, which does not have the sealing portion, facing downward. As illustrated in FIG. 2, the plurality of battery cells 200 may be disposed side by side in a left-right direction (X-axis direction) while standing in a vertical direction (Z-axis direction). In this case, each battery cell 200 may have the sealing portions facing in the front-back direction (Y-axis direction) and the upward direction (+Z-axis direction), and the receiving portion facing in the left-right direction (X-axis direction). In the case where the battery cell 200 is disposed as described above, it is easy to control the venting direction to one side, and edge cooling may be performed through the edge that does not include the sealing portion, thereby securing cooling performance.

The present disclosure is not limited to a specific type or shape of the battery cell 200, and various battery cells 200 known at the time of filing the present disclosure may be applied. In the present embodiment, although a pouch-type secondary battery with high energy density and easy stacking will be described as shown in the drawing, it is obvious that a cylindrical or prismatic secondary battery may also be applied to the battery cell 200.

Meanwhile, referring to FIG. 2, the battery module 10 of the present disclosure may further include a bus-bar frame assembly 400. The bus-bar frame assembly 400 may be provided inside the module case 100 and configured to cover at least one side of the plurality of battery cells 200. In the present embodiment, as shown in FIG. 2, the bus-bar frame assembly 400 may be coupled to the front and rear sides of the plurality of battery cells 200.

The bus-bar frame assembly 400 may include a bus-bar frame 410 and a plurality of bus-bars 420. The bus-bar frame 410 may be disposed to be coupled substantially to the front and rear sides of the plurality of battery cells 200. The bus-bar frame 410 may have slits through which the electrode leads 220 of the battery cells 200 extend outward in the +Y-axis or -Y-axis direction. In addition, the bus-bar frame 410 may be formed of a material having electrical insulation, such as a plastic material, and configured such that the bus-bar 420 may be attached to the outer surface.

The plurality of bus-bars 420, as a means for connecting the battery cells 200 in series and/or in parallel, may be formed of a metal material, such as copper, aluminum, nickel, etc., and may be configured in the shape of bars. The electrode leads 220 of the battery cells 200 may pass through the slits of the bus-bar frame 410 and to extend outside the bus-bar frame 410, and the extending portions may be attached to the surface of the bus-bar 420 by welding or the like.

Referring to FIG. 3, the barrier 300 may be provided between the battery cells 200. In particular, at least one barrier 300 may be included in one battery module 10. A plurality of barriers 300 may be provided along one direction in which the battery cells 200 are arranged. The barrier 300 may be provided to be disposed for at least one battery cell 200.

In particular, the barrier 300 may be configured to partition the plurality of battery cells 200. The barrier 300 may be configured to group the plurality of battery cells 200. For example, as illustrated in FIG. 3, a barrier 300 may be disposed for each group of four battery cells 200, so that the battery cells 200 may be grouped into sets of four.

The barrier 300 may be configured to extend further upward than the battery cells 200. In this case, the barrier 300 may be configured such that at least a portion thereof comes into contact with the inner surface of the module case 100. As a result, the gap between the barrier 300 and the module case 100 may be minimized, so that the space in which the venting gas flows may be reduced, thereby preventing thermal runaway propagation to other adjacent battery cells 200.

In addition, the barrier 300 may be made of a material having excellent heat resistance and/or fire resistance. Therefore, the barrier 300 may be configured to maintain the sealed structure without being deformed even at high temperature and high pressure.

According to the above-implemented configuration of the present disclosure, even if a thermal event occurs in any one of the battery cells 200 grouped by the barriers 300, venting gas, flames, and/or particles may be suppressed from moving to other groups of battery cells 200. The propagation of thermal runaway between the battery cells 200 may be effectively prevented or delayed. Therefore, the safety and reliability of the battery module 10 may be ensured.

In addition, according to the above-implemented configuration of the present disclosure, the barrier 300 may contribute to the structural rigidity of the battery cells 200 by compressing the battery cells 200 when the battery cells 200 swell.

More specifically, the barrier 300 may include a first blocking member 310 and a second blocking member 320. The first blocking member 310 may be provided between the plurality of battery cells 200. The first blocking member 310 may be configured to block heat generated when a thermal event occurs inside the battery module 10. The first blocking member 310 may be configured as an insulating pad that is thinner than the battery cell 200. In addition, the first blocking member 310 may be configured as a compressive pad made of, for example, a material such as silicone or aerogel.

The second blocking member 320 may be provided on at least one side of the first blocking member 310. That is, the second blocking member 320 may be provided between the first blocking member 310 and the battery cell 200. The second blocking member 320 may be provided on one side or both sides of the first blocking member 310.

The second blocking member 320 may be configured to protect the first blocking member 310 from the outside of the first blocking member 310. To this end, the second blocking member 320 may be formed of a material having higher heat resistance and/or fire resistance than the first blocking member 310. In addition, the second blocking member 320 may be made of a material having a higher melting point than the first blocking member 310. For example, the second blocking member 320 may be made of a SUS material. As a result, the second blocking member 320 may maintain a sealed structure even at high temperatures and high pressures, thereby preventing the first blocking member 310 from being damaged or broken.

Furthermore, the second blocking member 320 may be configured to be bent at an end thereof. For example, as disclosed in the embodiment illustrated in FIG. 4, the second blocking member 320 may be configured such that its upper end is bent. That is, the second blocking member 320 may have a bent portion 321 formed at the end.

This bent portion 321 may be configured to suppress venting gas or flame from moving between adjacent battery cells 200. Referring to the bold arrow illustrated in FIG. 4, even when a thermal event occurs in the battery cell 200 provided on one side of the second blocking member 320, the bent portion 321 may be configured to suppress venting gas or flame from moving beyond the bent portion 321 to the adjacent battery cells 200. In addition, the bent portion 321 may be configured to guide venting gas or flame to move only toward the battery cells 200 provided on one side of the second blocking member 320.

According to the above-implemented configuration of the present disclosure, the battery cells 200 may be reliably partitioned by the bent shape of the second blocking member 320. In particular, the bent portion 321 may suppress, when a thermal event occurs in any battery cell 200, high-temperature venting gas or flames from spreading to adjacent battery cells 200 along the stacking direction (left-right direction) of the battery cells 200 (see the bold arrow in FIG. 4). Therefore, thermal runaway propagation between the battery cells 200 may be effectively prevented or delayed, thereby ensuring the safety and reliability of the battery module 10.

Meanwhile, considering the convenience of assembly or assembly tolerance, the first blocking member 310 may be configured to be spaced a predetermined distance apart from the upper surface of the module case 100. In this case, the second blocking member 320 may be provided to extend in the vertical direction further than the first blocking member 310. That is, the vertical height of the second blocking member 320 may be configured to be greater than the vertical height of the first blocking member 310.

In this case, when a thermal event occurs in any one battery cell 200, venting gas or flame is likely to spread to another adjacent battery cell 200 through a certain gap formed between the first blocking member 310 and the module case 100. As a result, a gap may be formed between the first blocking member 310 and the module case 100, so that venting gas or the like is more likely to spread to another adjacent battery cell 200 through the gap.

Accordingly, as disclosed in the embodiment illustrated in FIG. 4, the bent portion 321 of the second blocking member 320 may be configured such that its end comes into contact with the inner surface of the module case 100. That is, the bent portion 321 of the second blocking member 320 may be configured to be supported by the inner surface of the module case 100.

According to the above-implemented configuration of the present disclosure, since the gap between the second blocking member 320 and the module case 100 is minimized, the battery cells 200 may be reliably partitioned and separated. Therefore, thermal runaway propagation to other adjacent battery cells 200 may be prevented.

In addition, according to the above-implemented configuration of the present disclosure, since the bent portion 321 is supported by the module case 100, the second blocking member 320 may be prevented from being pushed toward the adjacent battery cells 200 by high pressure such as venting gas or flame. Accordingly, even if a thermal event occurs, the possibility that the second blocking member 320 is deformed by high-temperature and high-pressure venting gas or flame and that the venting gas or flame spreads to other battery cells 200 may be reduced.

In addition, the bent portion 321 may be configured to guide, when a thermal event occurs in any one battery cell 200, venting gas or flame toward the outside of the module case 100. The bent portion 321 may guide venting gas or flame not to move toward the adjacent battery cell 200 beyond the second blocking member 320.

More specifically, referring to FIG. 4, the bent portion 321 of the second blocking member 320 may be configured to be bent in a direction away from the first blocking member 310. That is, the bent portion 321 of the second blocking member 320 may be configured to be bent toward the battery cells 200.

According to the above-implemented configuration of the present disclosure, venting gas or flame may be further prevented from moving toward the adjacent battery cells 200 beyond the second blocking member 320. In addition, by preventing venting gas or flames from heading toward the first blocking member 310, the first blocking member 310 may be further prevented from being damaged or broken.

In particular, when the battery module 10 is viewed from the front or rear, the bent portion 321 may be configured in an oblique shape. For example, the bent portion 321 may be configured to be inclined upward. As disclosed in the embodiment illustrated in FIG. 4, the angle θ formed between the second blocking member 320 and the bent portion 321 may be configured as an obtuse angle. The inclination of the second blocking member 320 and the bent portion 321 may be configured to be approximately the same as the inclination formed by the sealing portion (folding portion) of the battery cell 200. Accordingly, the bent portion 321 may be provided above the battery cells 200 provided on one side of the second blocking member 320.

The venting gas or spark discharged from the battery cell 200 may have a strong tendency to flow upward due to its high temperature. As a result, as disclosed in the above embodiment, in the case where the bent portion 321 is configured to cover the upper portion of the battery cells 200, the flame or spark with strong straightness necessarily collides with the bent portion 321, thereby changing the flow direction of the venting gas or spark. Therefore, according to the above-implemented configuration of the present disclosure, the venting gas or the like may be more reliably suppressed from moving to the adjacent battery cells 200.

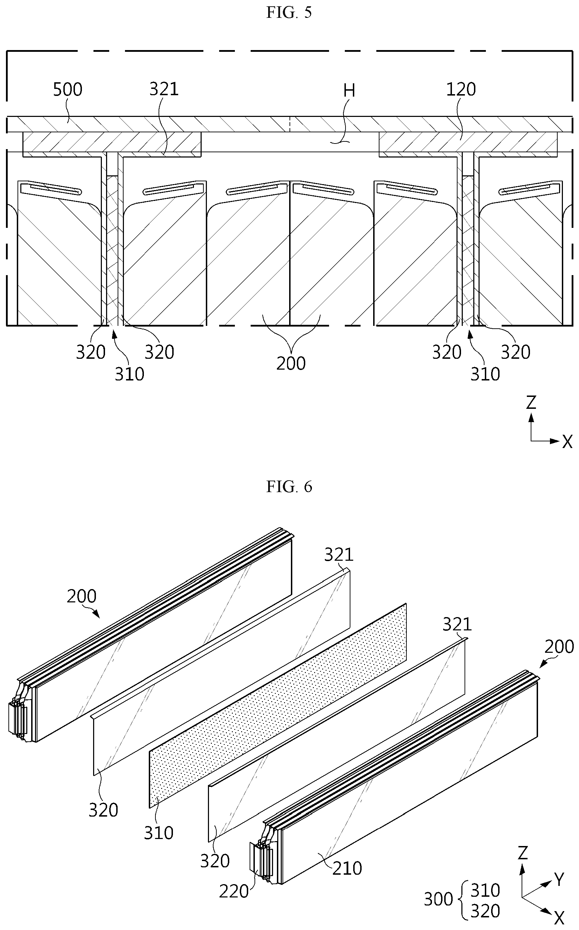

FIG. 5 is a drawing illustrating a second blocking member included in a battery module according to another embodiment of the present disclosure.

As another embodiment, referring to FIG. 5, the bent portion 321 may be bent so that the end of the second blocking member 320 is perpendicular to the second blocking member 320. The bent portion 321 of the second blocking member 320 may be configured to come into contact with the inner surface of the module case 100. Furthermore, the bent portion 321 may be configured to be in surface contact with the inner surface of the module case 100.

According to the above-implemented configuration of the present disclosure, since the bent portion 321 of the second blocking member 320 remains in stable contact with the upper surface of the module case 100, the second blocking member 320 may be prevented from being pushed out or moving in the left-right direction by high-temperature and high-pressure venting gas or flame. In addition, the possibility of the second blocking member 320 being bent or deformed by the internal pressure of the venting gas may be reduced. As a result, the mechanical stability or retention force of the battery module 10 may be secured.

FIG. 6 is an exploded perspective view of a barrier included in a battery module according to an embodiment of the present disclosure.

As described above, the battery cell 200 may be configured such that the receiving portion faces in the left-right direction. In addition, the second blocking member 320 may be configured in the form of a sheet or a thin pad. For example, the second blocking member 320 may be formed of a SUS sheet having high thermal conductivity.

In addition, referring to FIG. 6, the second blocking member 320 may be formed to extend along the longitudinal direction (Y-axis direction) of the battery cell 200. The second blocking member 320 may be configured in a shape or length identical to or similar to the shape or length of the receiving portion of the battery cell 200. Accordingly, both sides of the battery cell 200 may be blocked by the second blocking member 320, thereby preventing gas or the like from moving.

Referring to FIG. 6, the second blocking member 320 may be configured such that its side faces the side of the battery cell 200. That is, the second blocking member 320 may be provided on at least one side of the battery cell 200 so as to face the receiving portion of the battery cell 200. In particular, the second blocking member 320 may be configured to be in surface contact with the receiving portion of the battery cell 200. To this end, the second blocking member 320 may be configured in the form of a flat plane.

If the temperature deviation is large in one battery cell 200 during the charging and discharging process of the battery module 10, the lifespan or performance of the battery cell 200 may be significantly reduced. In addition, such a temperature deviation inside the battery cell 200 may be a cause of accelerating thermal runaway between the battery cells 200 when a thermal event occurs in the battery cell 200. However, as in the above-implemented configuration of the present disclosure, since the second blocking member 320 with high thermal conductivity is in surface contact with the receiving portion of the battery cell 200, the temperature deviation may be minimized in the battery cell 200. That is, the second blocking member 320 may dissipate heat inside the battery cell 200 to minimize excessive heat generation in a specific area.

In addition, according to the above-implemented configuration of the present disclosure, since the second blocking member 320 is configured to be in contact with the battery cell 200, the battery cell 200 may be protected from physical damage or impact. In particular, damage to the battery cell 200 due to pressure such as venting gas or flame generated from an adjacent battery cell 200 or swelling of the battery cell 200 may be minimized.

The second blocking member 320 may be provided on both sides of the first blocking member 310. Accordingly, in the case where four battery cell 200 groups are provided between four barriers 300, the second blocking member 320 may be provided on both sides of each battery cell 200 group. That is, as disclosed in the embodiment illustrated in FIG. 6, the battery cell 200, the second blocking member 320, the first blocking member 310, the second blocking member 320, and the battery cell 200 may be arranged in sequence.

In this case, the second blocking member 320 may be configured to be in entire contact with the battery cell 200. The second blocking member 320 may be configured to surround at least a portion of the first blocking member 310 on both sides of the first blocking member 310. The second blocking member 320 may be made of a material having a higher melting point than the first blocking member 310. For example, the first blocking member 310 may be made of aerogel (having a melting point of about 1200 degrees C) and the second blocking member 320 may be made of SUS (having a melting point of about 1400 degrees C or higher).

According to the above-implemented configuration of the present disclosure, the first blocking member 310 may be further protected by the second blocking member 320. Even if the first blocking member 310 is made of a material having good insulation performance, there is a possibility that it will be destroyed when it is directly exposed to high-temperature venting gas or flame. However, according to the above-implemented configuration, the first blocking member 310 may be protected by the second blocking member 320 made of a material having a relatively high melting point, thereby maximizing the insulation performance of the first blocking member 310.

In addition, in this case, the ends of the second blocking members 320 provided on both sides of the first blocking member 310 may be configured to be bent in a direction away from the first blocking member 310. That is, the bent portions 321 of the second blocking members 320 may be configured to face the groups of battery cells 200 that face each other. Furthermore, as disclosed in the embodiment illustrated in FIG. 4, the second blocking members 320 provided on both sides of the first blocking member 310 may be configured to be symmetrical with respect to the first blocking member 310.

According to the above-implemented configuration of the present disclosure, the groups of battery cells 200 may be reliably partitioned and separated by the second blocking members 320 provided on both sides of the battery cell 200 group. Accordingly, even if a thermal event occurs in any battery cell 200 group, high-temperature venting gas or flames may be further suppressed from moving along the stacking direction of the battery cells 200 in the space between the battery cells 200 and the module case 100. Therefore, according to the above-implemented configuration of the present disclosure, thermal runaway between the battery cells 200 in the battery module 10 may be effectively prevented or delayed.

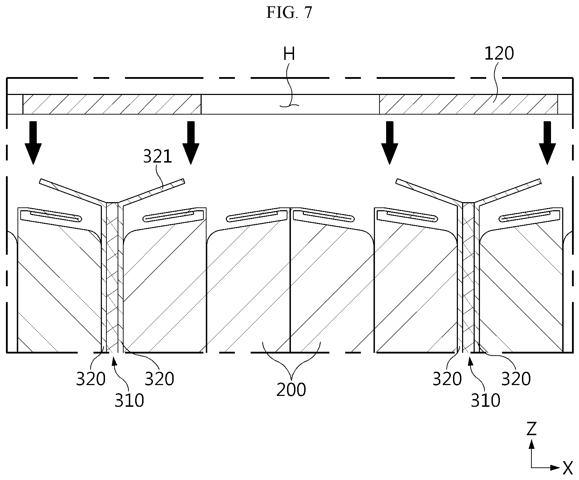

FIG. 7 is a drawing illustrating a state in which a top plate included in a battery module is separated according to an embodiment of the present disclosure.

Referring to FIG. 7 and other drawings, the module case 100 may include a case body 110 and a top plate 120. The case body 110 may be configured such that the battery cell 200 is seated therein. The case body 110 may be configured as a metal material having rigidity and heat resistance in order to physically or chemically protect the stored battery cells 200.

In this case, the case body 110 may have an upper opening, and front and rear openings. For example, the case body 110 may be configured as a U-frame. In the case where the case body 110 is configured as a U-frame, it may be provided to cover the left and right sides and the lower side of the plurality of battery cells 200. The case body 110 may include left and right plates covering the left and right sides of the plurality of battery cells 200, and a lower plate covering the lower side of the plurality of battery cells 200. In addition, the left plate, right plate, and lower plate may be configured in an integrated form.

The top plate 120 may be provided to form the upper side of the module case 100. In the case where the case body 110 is provided as a U-frame, the top plate 120 may be coupled to the upper opening of the case body 110. The top plate 120 may be welded to the case body 110. In this case, the top plate 120 and the case body 110 may be coupled to each other into a square tube with front and rear openings.

In addition, referring to FIG. 2 and other drawings, the module case 100 may include end plates 130 provided on the front and rear openings of the case body 110. The end plate 130 may be welded to the case body 110. Although not shown in the drawings for convenience, the end plate 130 may be configured such that, for example, an inner surface is made of an insulating material and an outer surface is made of a metal material. In addition, the end plate 130 may be partially provided with holes or slits for exposing components that are required to be exposed to the outside, such as a positive electrode terminal and negative electrode terminal or a connector of the battery module 10.

In addition, the module case 100 may be formed in various other shapes. For example, the module case 100 may include a box-shaped lower case having an upper opening and an upper cover provided to cover the upper opening of the lower case.

In this case, referring to FIG. 7, the bent portion 321 of the second blocking member 320 may be configured to be compressible by the top plate 120. That is, as the top plate 120 is coupled to the case body 110, the bent portion 321 of the second blocking member 320 may be configured to be compressed downward by the top plate 120.

According to the above-implemented configuration of the present disclosure, as the top plate 120 is coupled to the case body 110 by the bent shape of the second blocking member 320, the end of the bent portion 321 may be naturally pressed by the top plate 120. In this case, since the bent portion 321 and the top plate 120 are configured to be completely in close contact with each other, it is possible to more reliably prevent venting gas or flame from moving into the gap between the second blocking member 320 and the top plate 120. Therefore, according to the above-implemented configuration of the present disclosure, since there is no need to consider the tolerance between the second blocking member 320 and the top plate 120, the assemblability of the battery module 10 may be improved.

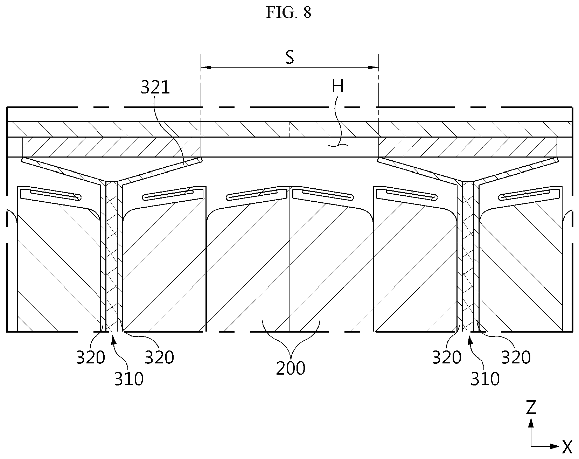

FIG. 8 is a drawing illustrating a second blocking member included in a battery module according to another embodiment of the present disclosure.

Referring to FIG. 8, a venting hole H may be formed in the module case 100. The venting hole H may be configured to discharge venting gas generated from the battery cell 200 to the outside of the module case 100.

For example, as illustrated in FIG. 8, a venting hole H may be formed on the upper side of the module case 100, i.e., on the top plate 120, so that upward-directional venting of the battery module 10 may be possible through the venting hole H.

A plurality of venting holes H may be provided at regular intervals in the horizontal direction (X-axis and Y-axis directions). The plurality of venting holes H may be located between adjacent barriers 300 among a plurality of barriers 300 arranged in one direction.

That is, the venting hole H may be provided above one or more battery cells 200 provided between adjacent barriers 300. For example, as illustrated in FIGS. 2 and 3, in the battery module 10 according to an embodiment of the present disclosure, a barrier 300 may be disposed for each group of four battery cells 200, and a plurality of venting holes H may be formed above the battery cells 200 provided between the barriers 300 in a row along the longitudinal direction (Y-axis direction) of the battery cells 200.

As described above, the venting holes H provided in the top plate 120 may be configured to discharge gas or flame generated inside the battery module 10, when thermal runaway occurs in the battery module 10, to the outside of the battery module 10. Accordingly, the remaining portions of the module case 100, excluding the venting holes H, may be closed, and gas or flame may be discharged in a straight line toward the venting holes H.

According to the above-implemented configuration of the present disclosure, even if a thermal event occurs at any location of the battery cell 200, the gas or flame generated from the battery cell 200 may be discharged to the outside of the battery module 10 through specific venting holes H provided above the battery cell 200, thereby enabling smooth venting.

In this case, the bent portion 321 of the second blocking member 320 may be configured to be bent toward the venting hole H. That is, the bent portion 321 may be configured to guide the venting gas or flame toward the venting hole H. As a result, the venting gas or flame may be discharged to the outside of the battery module 10 through the venting hole H without moving to the first blocking member 310 or another group of battery cells 200 by the bent portion 321.

In this case, a sealed space may be formed by the second blocking members 320 adjacent to each other among the plurality of barriers 300. Here, the sealed space indicates a space to restrict the movement of venting gas between the battery cells 200 adjacent to each other in the left-right direction (X-axis direction) with one second blocking member 320 provided therebetween. The sealed space may be configured to be in communication with the venting hole H so that gas generated in the battery cell 200 is guided and discharged only toward the venting hole H, instead of moving toward other battery cells 200.

Therefore, according to the above-implemented configuration of the present disclosure, the upward-directional venting may be performed more effectively. When the gas generated inside the battery module 10 is discharged in various directions, the time for discharging the venting gas may become longer, which may significantly reduce the safety of the battery module 10. However, according to the present configuration, the venting gas or the like may be quickly guided to the venting hole H, thereby minimizing the gas from spreading in all directions inside the module case 100.

Furthermore, the bent portion 321 of the second blocking member 320 may be configured so that its end is in contact with the venting hole H. That is, the bent portion 321 of the second blocking member 320 may be located in the area where the venting hole H is formed. The area where the venting hole H is formed may range from the inner circumferential surface of the venting hole H to the inner space formed by the venting hole H, such as the area indicated by S in FIG. 8. For example, as disclosed in the embodiment illustrated in FIG. 8, the end of the bent portion 321 of the second blocking member 320 may be configured to be in contact with a portion that corresponds to the inner surface of the top plate 120 and where the venting hole H begins.

According to the above-implemented configuration of the present disclosure, the end of the bent portion 321 of the second blocking member 320 may be configured to come into contact with the venting hole H, so that the sealed space may be more reliably formed, and the movement of the venting gas or flame may be restricted in the left-right direction (X-axis direction). Therefore, the venting gas or flame may be further guided toward the venting hole H, thereby performing quick-directional venting to the outside.

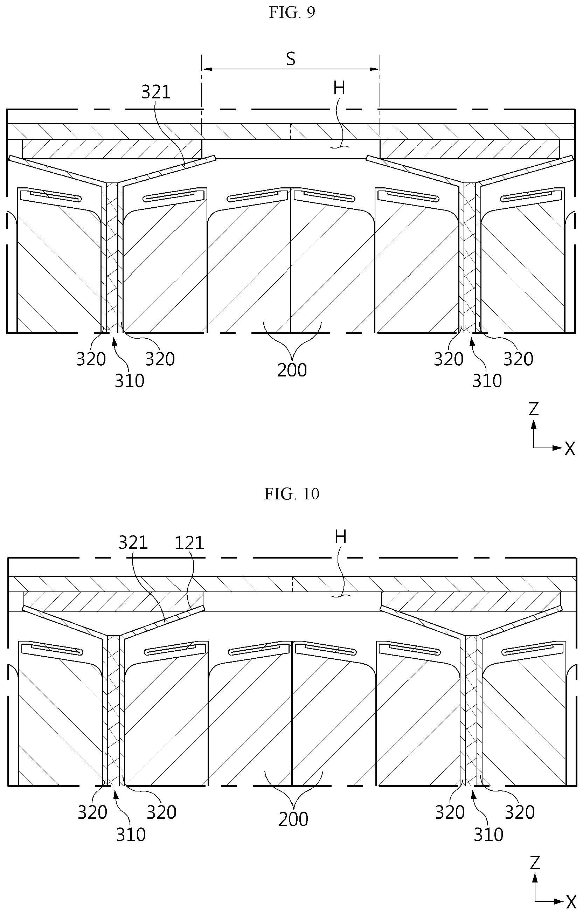

FIG. 9 is a drawing illustrating a second blocking member included in a battery module according to another embodiment of the present disclosure.

As another embodiment, the bent portion 321 of the second blocking member 320 may be configured such that its end is disposed inside the inner space formed by the venting hole H. That is, the outer surface of the bent portion 321 may come into contact with the inner surface of the top plate 120, and the end of the bent portion 321 may be disposed inside the inner space of the venting hole H.

The module case 100 (top plate 120) may be made of a metal material with high thermal conductivity, such as aluminum, so that heat may be transferred to the module case 100 when a thermal event occurs. However, according to the above-implemented configuration, it is possible to suppress or prevent venting gas, sparks, or flames from coming into contact with the inner surface of the venting hole H (i.e., the top plate 120) by the end of the bent portion 321. Therefore, thermal propagation through the module case 100 may be suppressed.

In addition, as the top plate 120 presses the end of the bent portion 321, the end of the bent portion 321 may apply a force to the top plate 120 to be pushed outward as a reaction thereof. In this case, the top plate 120 may expand upward to form a gap between the top plate 120 and the second blocking member 320. However, according to the above-implemented configuration of the present disclosure, since the force of the end of the bent portion 321 pushing the top plate 120 is minimized, it is possible to prevent the top plate 120 from expanding upward to produce a gap between the top plate 120 and the second blocking member 320. Therefore, the movement of venting gas or flame to another adjacent battery cell 200 group may be suppressed.

FIG. 10 is a drawing illustrating a top plate included in a battery module according to another embodiment of the present disclosure.

In the case where the end of the bent portion 321 of the second blocking member 320 is configured to be in contact with the venting hole H, the top plate 120, as illustrated in FIG. 10, may have an inclined surface 121. The inclined surface 121 may be provided on the inner surface of the top plate 120, that is, on the inner circumferential surface of the venting hole H. The inclined surface 121 may be formed in the top plate 120 by chamfering a portion of the part where the venting hole H is formed. Accordingly, the end of the bent portion 321 of the second blocking member 320 may be configured to come into contact with the inclined surface 121. The end of the bent portion 321 may be configured to be in surface contact with the inclined surface 121.

According to the above-implemented configuration of the present disclosure, a repulsive force may be applied between the inclined surface 121 and the end of the bent portion 321 of the second blocking member 320 because they come into surface contact with each other. Therefore, when a high pressure such as venting gas or flame is applied to the bent portion 321 of the second blocking member 320, the bent portion 321 of the second blocking member 320 may be supported by the inclined surface 121, so that the retention force between the bent portion 321 of the second blocking member 320 and the top plate 120 may be further improved. In particular, when the second blocking member 320 is applied with a force in a direction away from the battery cell 200 due to swelling of the battery cell 200, since the bent portion 321 of the second blocking member 320 is in close contact with the inclined surface 121, movement or deformation of the bent portion 321 of the second blocking member 320 may be minimized.

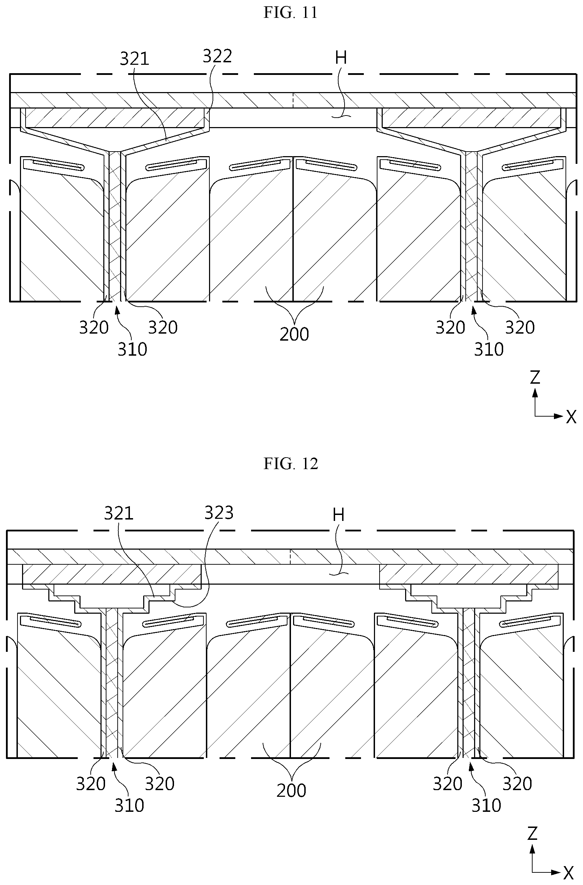

FIG. 11 is a drawing illustrating a second blocking member included in a battery module according to another embodiment of the present disclosure.

Referring to FIG. 11, a second blocking member 320 may include a support 322. The support 322 may be configured in a form in which an end of the bent portion 321 of the second blocking member 320 is bent outward. More specifically, the support 322 may be configured such that the end of the bent portion 321 of the second blocking member 320 is bent toward the inner surface of the venting hole H. In this case, two second blocking members 320 are provided on the left and right sides of one venting hole H, and the support 322 may be bent to correspond to the position where the venting hole H is formed.

The support 322 may be provided so as to be supported on the inner circumferential surface of the venting hole H. In particular, the support 322 may be in surface contact with the inner surface of the part where the venting hole H is formed (the inner space formed by the venting hole H) in the top plate 120. To this end, the support 322 may have an outer surface that is parallel to the inner surface of the venting hole H. For example, the support 322 may have a plate shape that stands vertically parallel to the Y-Z plane to come into contact with the inner surface of the venting hole H.

According to the above-implemented configuration of the present disclosure, the second blocking member 320 may be more reliably supported on the top plate 120. Therefore, deformation such as bending does not occur due to external vibration or impact, or internal spark or pressure of venting gas, so that the shape and position of the second blocking member 320 may be stably maintained.

In addition, according to the above-implemented configuration of the present disclosure, movement of the second blocking member 320 in the outward direction may be further suppressed, so that the arrangement of the battery cells 200 and the barriers 300 may be stably maintained. In particular, when the second blocking member 320 is applied with a force in a direction (outward direction) away from the battery cell 200 due to swelling of the battery cell 200, since the support 322 is in close contact with the inner surface of the venting hole H, the movement of the bent portion 321 of the second blocking member 320 may be minimized.

FIG. 12 is a drawing illustrating a second blocking member included in a battery module according to another embodiment of the present disclosure.

Referring to FIG. 12, the second blocking member 320 may have an unevenness portion 323. The unevenness portion 323 may be configured such that at least a portion of the bent portion 321 of the second blocking member 320 protrudes. The unevenness portion 323 may be configured to protrude from the inner surface of the bent portion 321 of the second blocking member 320 in a direction toward the battery cell 200, that is, toward the inside of the module case 100.

In addition, a plurality of unevenness portions 323 may be provided. The plurality of unevenness portions 323 may be arranged to be spaced apart from each other along the vertical direction (Z-axis direction). The plurality of unevenness portions 323 may be configured to be directed upward as they get closer to the outer end of the bent portion 321. In addition, the plurality of unevenness portions 323 may be configured to extend along the longitudinal direction (Y-axis direction) of the battery cell 200.

Furthermore, the unevenness portion 323 may be configured to form a space (groove) in which sparks or flames emitted from the battery cell 200 are collected. The unevenness portion 323 may be configured in a dot shape protruding from the inner surface of the bent portion 321. Alternatively, as shown in the embodiment in FIG. 12, the unevenness portion 323 may be configured such that the bent portion 321 of the second blocking member 320 is bent at least once. In this case, the unevenness portion 323 may indicate a portion that protrudes inward from the bent portion 321 of the second blocking member 320. In this case, the second blocking member 320 made of a SUS metal material may be bent to form the unevenness portion 323.

According to the above-implemented configuration of the present disclosure, sparks or flames emitted from the battery cell 200 may be reflected by the unevenness portion 323, thereby suppressing the flow of sparks or flames which have a strong tendency to move straight. In addition, in this case, particles of sparks may be collected by grooves or the like formed between the unevenness portions 323. Therefore, sparks or flames may be effectively blocked from being discharged to the outside of the module case 100 through the venting hole H. Accordingly, it is possible to suppress the occurrence of flames by the spark and oxygen reacting outside the module case 100.

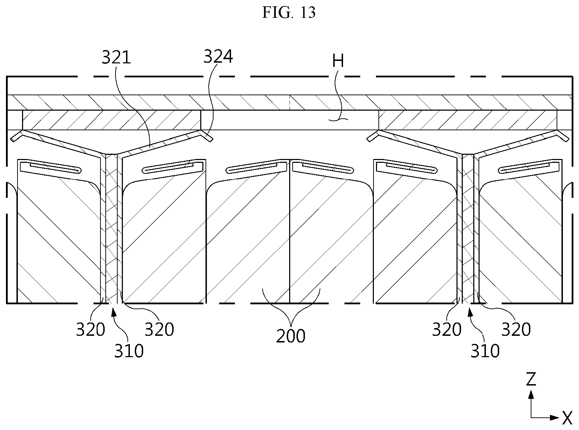

FIG. 13 is a drawing illustrating a second blocking member included in a battery module according to another embodiment of the present disclosure.

Referring to FIG. 13, a second blocking member 320 may have an inner bent portion 324. The inner bent portion 324 may be configured such that the end of the bent portion of the second blocking member 320 extends to be bent inward at a predetermined angle. In particular, the inner bent portion 324 may be configured such that the end of the bent portion 321 is bent toward the battery cells 200. The inner bent portion 324 may be configured such that it becomes closer to the battery cell 200 in the inward direction (-Z-axis direction) in FIG. 13. Here, the inner bent portion 324 may be configured in an oblique shape. That is, the inner bent portion 324 may be configured to form an obtuse angle with the bent portion 321.

Furthermore, the inner bent portion 324 may be configured to block the sparks from moving toward the venting hole H. That is, the inner bent portion 324 may be configured to guide the sparks or the like moving toward the venting hole H and the outside of the module case 100 toward the inside of the module case 100. For example, in the embodiment in FIG. 13, the inner bent portion 324 may change the flow direction of the sparks moving in the +Z-axis direction toward the venting hole H so that they move in the opposite direction, that is, in the -Z-axis direction.

According to the above-implemented configuration of the present disclosure, the second blocking member 320 may change the flow direction of the sparks from the inside of the module case 100 toward the venting hole H to the inside, thereby effectively blocking the sparks from being discharged to the outside of the module case 100. Accordingly, it is possible to suppress the sparks from reacting with oxygen outside the module case 100 to generate a flame.

Furthermore, according to the above-implemented configuration of the present disclosure, since the inner bent portion 324 covers only a part of the venting hole H, the venting gas may be discharged through the venting hole H. Accordingly, while blocking sparks or the like, venting gas may be smoothly discharged through the venting hole H.

Referring to FIGS. 1 to 13, the battery module 10 according to an embodiment of the present disclosure may further include a module cover 500.

Referring to FIGS. 1 and 4, the module cover 500 may be configured to at least partially cover the module case 100. For example, the module cover 500 may be configured to cover the top plate 120. The module cover 500 may be provided outside and/or inside the module case 100.

In particular, the module cover 500 may be configured to cover the venting hole H. In this case, the module cover 500 may be configured in the form of a sheet and mounted on the module case 100. The module cover 500 may be configured to cover all of the plurality of venting holes H.

The module cover 500 may be configured to suppress venting gas or flames emitted when a thermal event occurs inside the battery module 10 from spreading to another battery module 10. To this end, the module cover 500 may be made of a material having excellent heat resistance and/or fire resistance, such as a mica sheet or a silicon composite material.

Accordingly, the module cover 500 may maintain morphological stability without deformation even when high-temperature heat is generated, thereby stably blocking high-temperature gas or flames generated from the battery cell 200. According to the above-implemented configuration of the present disclosure, since the module cover 500 is made of a hard and heat-resistant material, deformation due to high-temperature gas or flames may be minimized.

The module cover 500 may be configured to be at least partially openable by venting gas or flame, as disclosed in the embodiment illustrated in FIG. 4. Specifically, at least a portion of the module cover 500 may be configured to be ruptured by the pressure or heat of the venting gas heading toward the venting hole H. Alternatively, at least a portion of the module cover 500 may be configured to be completely separated.

To this end, the module cover 500 may be provided with a tear line L. The tear line L may be configured to be opened by the venting gas, thereby discharging the venting gas to the outside of the battery module 10.

A plurality of tear lines L may be provided at regular intervals in the horizontal direction (X-axis and Y-axis directions). In particular, the tear lines L may be formed at positions corresponding to the venting holes H. Alternatively, unlike the embodiment illustrated in the drawing, the tear line L may be configured in a shape corresponding to the venting hole H.

According to the above-implemented configuration of the present disclosure, when a thermal event occurs in a specific battery cell 200, the tear line L provided on one side of the specific battery cell 200 may be ruptured to open at least one of the plurality of venting holes H. Accordingly, venting gas or the like may be discharged to the outside of the module case 100 through the open venting hole H (see the bold arrow in FIG. 4).

In addition, the module cover 500 may prevent gas or flame discharged to the outside of the module case 100 from flowing back into the battery module 10. That is, the venting hole H provided on the side of the battery cell 200 where the thermal event does not occur may not be opened and may remain closed. As a result, the venting gas or flame discharged to the outside through the open venting hole H may be fundamentally blocked from flowing back into the battery module 10. In addition, the module cover 500 of the remaining portion that is not ruptured may block not only heat but also high-temperature gas, flame, or discharges generated from the battery cell 200.

That is, according to the above-mentioned implemented configuration of the present disclosure, when thermal runaway occurs in the battery module 10, not only may the venting gas or flame generated inside the battery module 10 be smoothly discharged to the outside of the battery module 10, but the discharged venting gas or flame may also be prevented from flowing back into the battery module 10. Therefore, the thermal runaway propagation may be effectively prevented or delayed by minimizing the thermal propagation to neighboring battery cells 200 or battery modules 10.

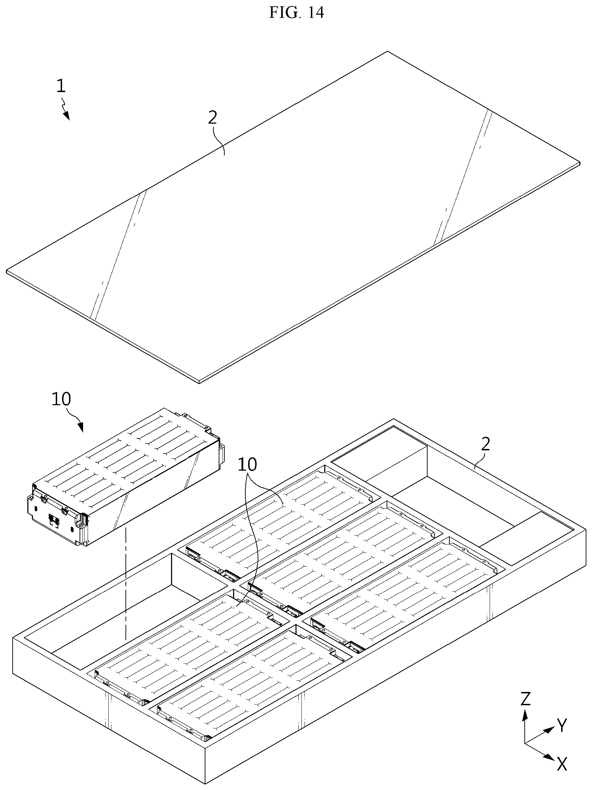

FIG. 14 is a schematic perspective view of a battery pack including a battery module according to an embodiment of the present disclosure.

Referring to FIG. 14, a battery pack 1 according to an embodiment of the present disclosure may include one or more battery modules 10 according to an embodiment of the present disclosure described above. The battery pack 1 according to the present disclosure may further include a pack case 2 for storing a BMS (Battery Management System), a current sensor, a fuse, and the like for integrated control of charging and discharging of one or more battery modules, and components described above.

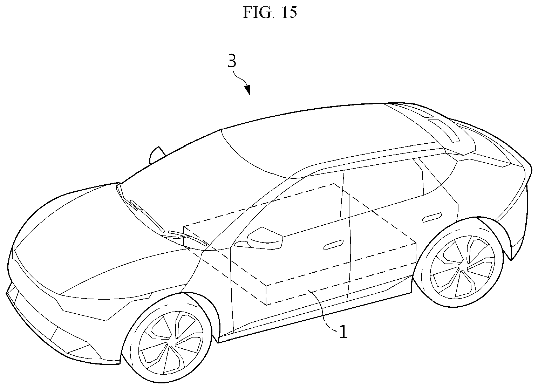

FIG. 15 is a schematic perspective view of a vehicle including a battery pack according to an embodiment of the present disclosure.

Referring to FIG. 15, a vehicle 3 according to an embodiment of the present disclosure may include one or more battery packs 1 according to an embodiment of the present disclosure or battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 operates by power supplied from a battery pack 1 or battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a module case having an inner space formed therein;
a plurality of battery cells configured to be stored in the inner space of the module case; and
a barrier comprising a first blocking member provided between the plurality of battery cells and a second blocking member provided on at least one side of the first blocking member and configured such that its end is bent.

2. The battery module according to claim 1,
wherein the bent portion of the second blocking member is configured such that its end is in contact with an inner surface of the module case.

3. The battery module according to claim 1,
wherein the bent portion of the second blocking member is configured to be bent in a direction away from the first blocking member.

4. The battery module according to claim 1,
wherein the second blocking member is configured such that a surface thereof faces a surface of the battery cell.

5. The battery module according to claim 1,
wherein the second blocking member is provided on both sides of the first blocking member, and its end is configured to be bent in a direction away from the first blocking member.

6. The battery module according to claim 1,
wherein the module case comprises
a case body having an upper opening to allow the battery cell to be seated therein, and
a top plate coupled to cover the upper opening of the case body, and
wherein the bent portion of the second blocking member is configured to be compressible by the top plate.

7. The battery module according to claim 1,
wherein the module case has a venting hole formed on an upper side to discharge venting gas generated in the battery cell to an outside, and
wherein the bent portion of the second blocking member is configured to be bent toward the venting hole.

8. The battery module according to claim 7,
wherein the bent portion of the second blocking member is configured such that its end is in contact with the venting hole.

9. The battery module according to claim 7,
wherein the bent portion of the second blocking member comprises a support configured such that its end is bent toward an inner circumferential surface of the venting hole.

10. The battery module according to claim 1,
wherein the bent portion of the second blocking member has one or more unevenness portions configured such that at least a portion thereof protrudes inward.

11. The battery module according to claim 1,
wherein the bent portion of the second blocking member has an inner bent portion configured such that its end is bent toward the battery cell.

12. A battery pack comprising a battery module according to any one of claims 1 to 11.

13. A vehicle comprising a battery module according to any one of claims 1 to 11.
